## Europäisches Patentamt
## European Patent Office
## Office européen des brevets

(19)

(11) Veröffentlichungsnummer: **0 044 313**
**B1**

(12) **EUROPÄISCHE PATENTSCHRIFT**

(45) Veröffentlichungstag der Patentschrift:
08.08.84

(21) Anmeldenummer: 81900133.0

(22) Anmeldetag: 30.12.80

(86) Internationale Anmeldenummer:
**PCT/AT 80/00039**

(87) Internationale Veröffentlichungsnummer:
**WO 81/02040 (23.07.81 Gazette 81/17)**

(51) Int. Cl.³: **F 02 B 75/22,** F 01 B 1/12,
F 02 F 7/00, F 02 B 73/00,
F 02 B 63/06, F 04 B 41/04

(54) **KOLBENMASCHINE.**

(30) Priorität: 16.01.80 AT 201/80

(43) Veröffentlichungstag der Anmeldung:
27.01.82 Patentblatt 82/4

(45) Bekanntmachung des Hinweises auf die Patenterteilung:
08.08.84 Patentblatt 84/32

(84) Benannte Vertragsstaaten:
CH DE FR GB LI LU NL SE

(56) Entgegenhaltungen:
DE - A - 2 904 387
DE - B - 1 142 675
DE - B - 1 295 276
GB - A - 102 286
GB - A - 630 585
GB - A - 718 777

(73) Patentinhaber: Jenbacher Werke AG,
Achenseestrasse 1-3, A-6200 Jenbach/Tirol (AT)

(72) Erfinder: SÖLLNER, Robert, Sieglstrasse 15,
A-6200 Jenbach (AT)
Erfinder: BURGSTALLER, Günter, Am Rain 376,
A-6135 Stans (AT)
Erfinder: MAURER, Anton, Schopperweg 9,
A-6330 Kufstein (AT)

(74) Vertreter: Hofinger, Engelbert et al, Torggler-Hofinger
Wilhelm-Greil-Strasse 16, A-6020 Innsbruck (AT)

## Beschreibung

Die Erfindung bezieht sich auf eine Kolbenmaschine mit mindestens einer Reihe von Kolben aufnehmenden Zylindern, die in mindestens zwei miteinander verbundenen, beispielsweise verschraubten, mehrzylindrigen Gehäuseteilblöcken angeordnet sind, mit einer durchgehenden Kurbelwelle, an der die Kolben mittels Pleuelstangen od. dgl. angelenkt sind, und einer gemeinsamen Ölwanne.

Kolbenmaschinen sind als Motoren, Verdichter und Pumpen bekannt. Sie bestehen aus einem Triebwerk mit Kurbelwelle, Pleuel, Kolben usw., das in einem Gehäuse arbeitet.

Im allgemeinen ist das Gehäuse einteilig ausgeführt. Es sind aber auch Kolbenmaschinengehäuse in Teilblockbauweise bekannt, die senkrecht zur Kurbelwellenachse verlaufende Trennfugen aufweisen.

In diesem Fall wird allerdings gemäß heutiger Praxis die Kurbelwelle nicht mehr im eigentlichen Gehäuse hängend, sondern in einer eigenen, einen Kurbelkasten bildenden Grundplatte liegend gelagert. Diese Grundplatte ist auch Träger der Gehäuseteilblöcke, die auf dieser befestigt sind und unterhalb der Grundplatte bzw. des Kurbelkastens wird im allgemeinen die Ölwanne an dieser befestigt.

Vorteile dieser Teilblockbauweise sind, daß Motorbaureihen mit verschiedenen Zylinderzahlen aus einzelnen Gehäuseteilblöcken hergestellt werden können, und daß an der Grundplatte seitlich zusätzliche Zylinder beispielsweise als Verdichterzylinder angebracht werden können, deren Kolben von der gemeinsamen Kurbelwelle des Motors bewegt werden.

Nachteilig bei dieser Bauweise ist vor allem der unwirtschaftlich hohe Fertigungs- und Materialaufwand, der aus der großen Zahl genau zu bearbeitender Flächen resultiert. Da die Pleuellänge relativ groß ist, kommt es bei schnell laufenden Maschinen leicht zu störenden Oszillationen. Die bekannte Bauweise wird daher fast ausschließlich bei langsam laufenden Kombinationen von Verbrennungsmotoren und Verdichtern angewandt.

Ferner ist aus GB-A-102 286 eine aus Einzelzylinder-Blöcken zusammengesetzte Maschine mit Lagerstühlen zur hängenden Lagerung der Kurbelwelle bekannt.

Aufgabe der Erfindung ist es, eine Kolbenmaschine in Teilblockbauweise zu schaffen, die einerseits den Vorteil der wahlweisen Zusammensetzbarkeit von Motorbaureihen mit verschiedenen Zylinderzahlen aufweist und andererseits auf die konstruktiven Vorteile eines einteiligen Zylinderblockes nicht verzichtet. Insbesondere soll auf einfache Weise eine verwindungssteife Gesamtanordnung erzielt werden, bei der die Verwendung einer durchgehenden Kurbelwelle unproblematisch ist.

Dies wird erfindungsgemäß dadurch erreicht, daß jeder Gehäuseteilblock einstückig mit Lagersühlen zur hängenden Lagerung der Kurbelwelle versehen ist, daß zwischen den unmittelbar benachbarten Lagerstühlen von zwei aneinandergrenzenden Gehäuseteilblöcken vertikale Trennfugen verlaufen, und daß die Gehäuseteilblöcke unmittelbar mit der Ölwanne verbunden, beispielsweise mit dieser verschraubt sind.

Dadurch ist es möglich, eine aus vielen Typen bestehende Baureihe von Kolbenmaschinen unter Verwendung weniger untereinander verschiedener Bauelemente zu fertigen.

Die erfindungsgemäße Kolbenmaschine weist den großen Vorteil auf, daß auf einen eigenen Kurbelkasten, der bei den bisher praktisch verwendeten Teilblockbauweisen als tragender Teil für die ganze Kolbenmaschine und überhaupt als das maßgebliche statische Element der Kolbenmaschiene dient, verzichtet werden kann.

Dadurch, daß die Gehäuseteilblöcke unmittelbar mit der Ölwanne verbunden sind, und daß die Ölwanne als mittragender Teil ausgeführt ist, erhält ein in den meisten Fällen ohnehin vorhandener Bauteil eine zusätzliche Funktion.

Vorteilhaft ist die Ölwanne aus einem Werkstoff mit erhöhter Festigkeit, beispielsweise Sphäroguß, gefertigt.

Ein Ausführungsbeispiel sieht vor, daß die Zylinder in den Gehäuseteilblöcken in an sich bekannter Weise in V-Form angeordnet sind, so daß sich für die tragenden Bauelemente gemeinsam mit der Ölwanne eine hinsichtlich des Widerstandsmomentes optimale Sternform ergibt.

Bei der Ausgestaltung der erfindungsgemäßen Kolbenmaschine in Teilblockbauweise mit mindestens einem als Kompressor oder als Motor-Kompressor ausgebildeten Gehäuseblock, ergibt sich eine wesentliche Vereinfachung durch Verwendung einheitlicher Einzelteile, besonders der Verschleißteile, wie z. B. der Hauptlager. Das bedeutet, daß die Wellendimensionen für den Motor- und Kompressorteil gleichgehalten werden können, desgleichen der prinzipielle Aufbau der Kurbelgehäuseteilblöcke. Weiters können Pleuel, Kolbenbolzen in der Verwendung als Kreuzkopfbolzen, Zylinderlaufbüchsen in der Verwendung als Kreuzkopfführungen usw. in der treibenden und der getriebenen Maschine gleichgehalten werden.

Vorteilhafterweise ist vorgesehen, daß in den aneinander angrenzenden Lagerstühlen benachbarter Gehäuseteilblöcke, welche jeweils ein gemeinsames Hauptlager für die Kurbelwelle bilden, auch die Lagerschalen in der Ebene der Trennfuge zwischen den Gehäuseteilblöcken getrennt sind.

Ein vorteilhaftes Verfahren zur Herstellung von zwei bei einer Trennfuge benachbarten Lagerschalen zur Einhaltung von Maßtoleranzen sieht vor, die Lagerschalen zuerst mit einer Breite, die der Breite zweier Lagerstühle entspricht, herzustellen und in der Ebene der Trennfuge zwischen den benachbarten Gehäuseteilblöcken zu trennen.

Es ist günstig, diese Lagerschalen in an sich bekannter Weise zweiteilig, also als Ober- und Unterschale, auszuführen. Jede der Unterschalen wird in ebenfalls bekannter Weise durch je einen Lagerbügel gehalten.

Je nach der Beanspruchung der Kurbelwelle quer zu ihrer Längsachse kann allenfalls auch nur ein Lagerschalenpaar an der Trennfuge eingebaut sein.

Ein erfindungsgemäßes Verfahren zur Bearbeitung der Lagerstühle der erfindungsgemäßen Kolbenmaschine sieht vor, daß mindestens zwei Gehäuseteilblöcke der Kolbenmaschine miteinander verbunden, vorzugsweise betriebsbereit aneinander angeflanscht werden, worauf die Lagersitze für die Hauptlager der Kurbelwelle spanabhebend in einem Arbeitsgang auf Paßform gearbeitet werden.

Es besteht aber auch die Möglichkeit, jede Teilfläche für sich allein fertig zu bearbeiten und dann bei der Montage mit fluchtenden Hauptlagerbohrungen, z. B. unter Verwendung einer Lehrwelle, zusammenzufügen.

Werden die Triebwerke eines treibenden Gehäuseteilblockes vom Triebwerk eines getriebenen Gehäuseteilblockes durch eine Zwischenwand getrennt, die sich beispielsweise an einer vollgegossenen Querwand der Ölwanne anschließt, so entstehen völlig getrennte Ölräume für die treibende und für die getriebene Maschine, wobei naturgemäß die Trennwand an der Durchführung der Kurbelwelle eine an sich bekannte Kurbelwellenabdichtung tragen muß. Sinngemäß sind die Ölkanäle in den Teilblöcken in diesem Falle getrennt zu halten.

Durch diese Ausführung ist es möglich, verschiedene Schmierstoffe für die antreibende und die angetriebene Maschine zu verwenden. Dieses Ausführungsbeispiel trägt dazu bei, daß die erfindungsgemäße Ausgestaltung der Kolbenmaschine in Gehäuseteilblöcken praktisch uneingeschränkt angewandt werden kann.

Dies gilt vor allem für die Kombination von Verbrennungsmotoren verschiedener Art mit Luft- oder Gasverdichtern, Hydraulikpumpen und ähnlichen, bei welchen vorteilhaft verschiedene Schmierstoffe, die nicht vermischt werden sollen, zu verwenden sind.

Nachstehend werden verschiedene Ausführungsbeispiele der Erfindung anhand der Figuren der Zeichnungen beschrieben, ohne daß diese Ausführungsbeispiele im einschränkenden Sinn verstanden werden sollen. Ebenso sollen die in den nachfolgenden Patentansprüchen angeführten Bezugszeichen keine Einschränkung bedeuten, sie dienen lediglich dem erleichterten Auffinden bezogener Teile in den Figuren der Zeichnung.

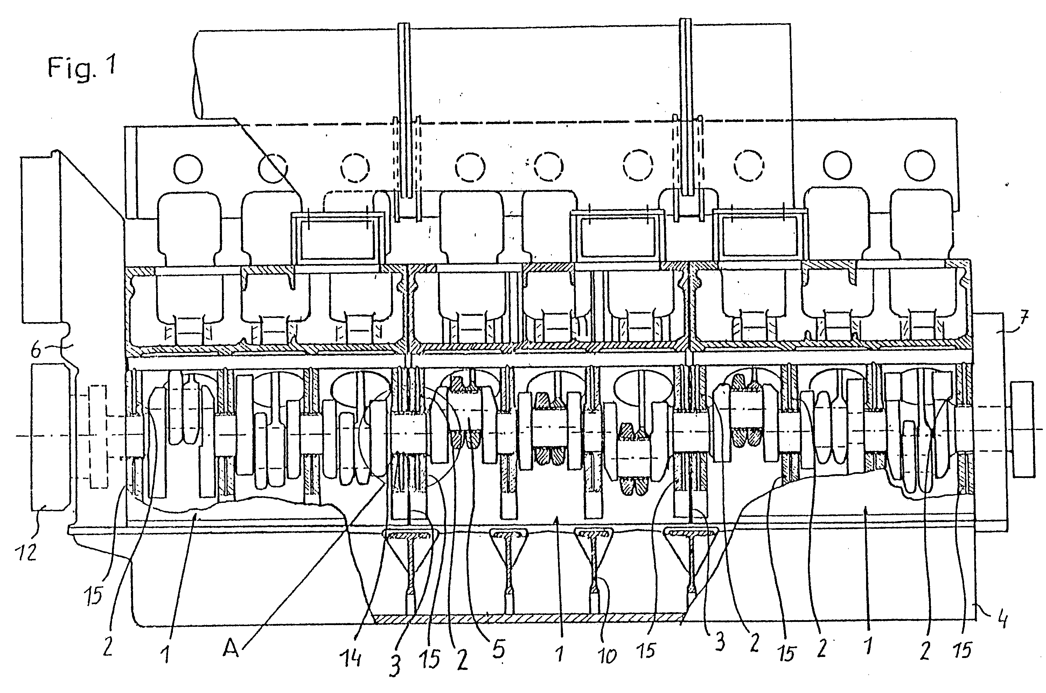

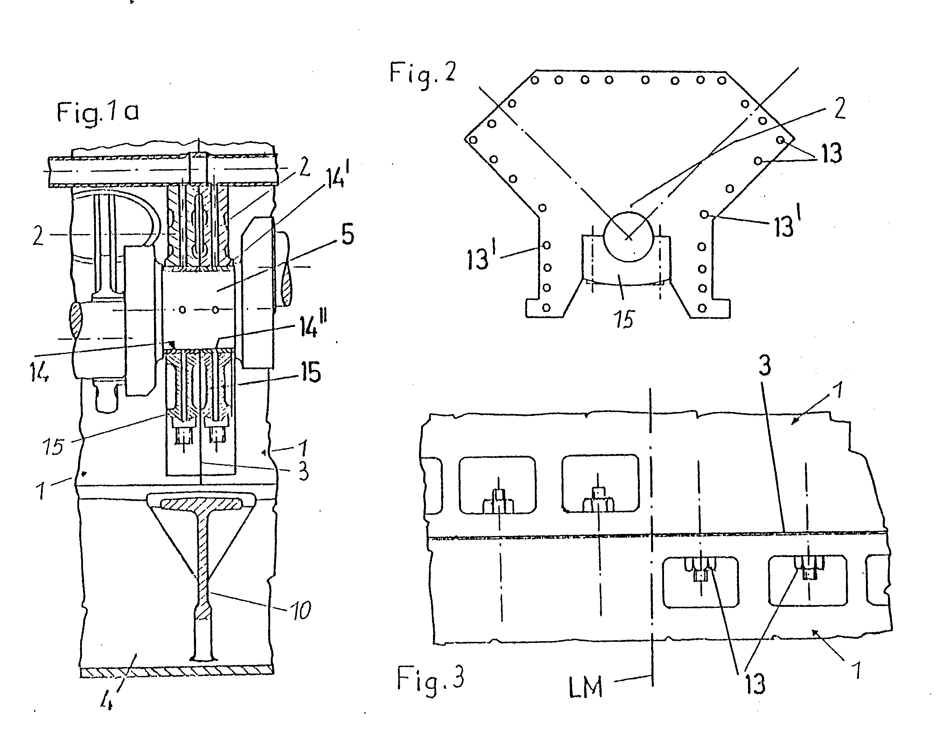

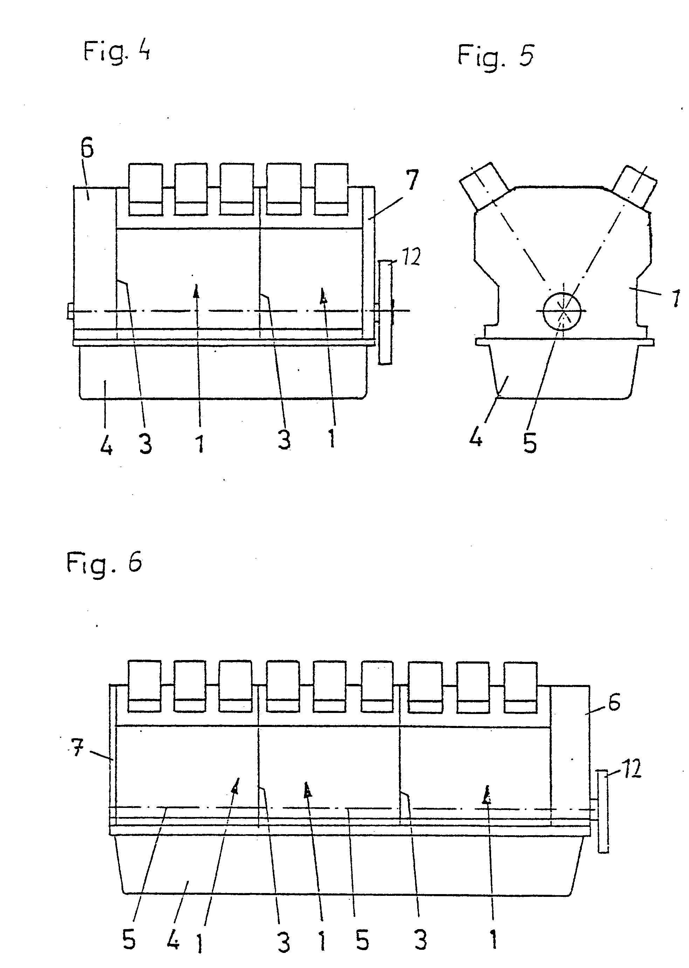

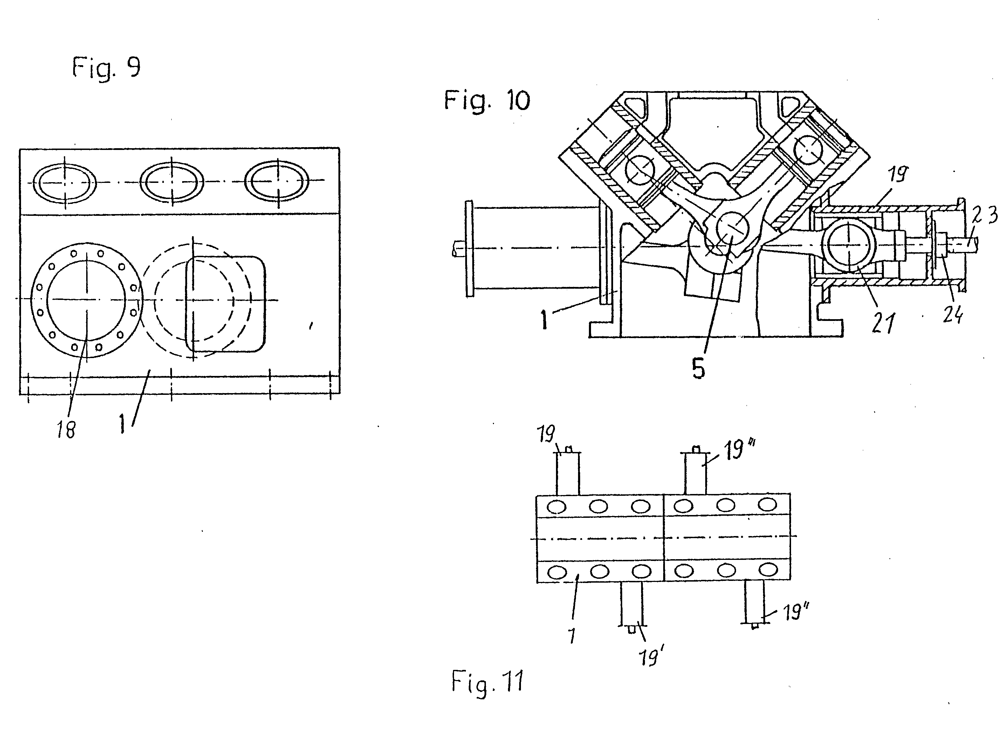

Die Fig. 1 zeigt das teilweise geschnittene Schema einer aus drei Gehäuseteilblöcken bestehenden Kolbenmaschine, die Fig. 1a einen vergrößerten Ausschnitt dieser Maschine im Bereich zwischen zwei Gehäuseteilblöcken, die Fig. 2 die Teilblockverflanschung mit einem Detail der Lagerung der Kurbelwelle in den Gehäuseteilblöcken, die Fig. 3 die Verbindung zweier Gehäuseteilblöcke, die Fig. 4 bis 8 zeigen schematisch Varianten der erfindungsgemäßen Kolbenmaschine, die Fig. 9 zeigt die schematische Seitenansicht eines Gehäuseteilblockes mit Arbeits- und Kompressorzylindern, die Fig. 10 die Vorderansicht des Gehäuseteilblockes nach Fig. 9 teilweise im Schnitt, und die Fig. 11 ein Anordnungsbeispiel der Gehäuseteilblöcke nach Fig. 9 und 10.

Die Fig. 1 zeigt ein Ausführungsbeispiel der Erfindung, bei dem drei Gehäuseteilblöcke 1, von denen jeder sechs in V-Form angeordnete Zylinder aufweist, zu einer 18-Zylinder-Kolbenmaschine zusammengesetzt sind. Jeder der Gehäuseteilblöcke 1 weist den jeweiligen Lagerstellen der Kurbelwelle 5 zugeordnete Lagerstühle 2 auf, in welchen die Kurbelwelle mittels Lagerbügeln 15 gehalten ist. Die Gehäuseteilblöcke 1 sind an den normal zur Kurbelwellenachse verlaufenden Trennfugen miteinander verbunden und gemeinsam an eine durchgehende, als tragendes Element ausgebildete Ölwanne 4 angeflanscht. Die Stirnseiten der Gehäuseteilblöcke 1 sind als durchgehende Wand mit entsprechenden Durchbrechungen ausgebildet, so daß ein natürlicher Abschluß der Kolbenmaschine gegeben ist. In bekannter Weise ist an der Abtriebsseite der Kolbenmaschine ein Räderkasten 6 angeordnet, welcher den bekannten Steuerungsantrieb, beispielsweise ein Spülgebläse für Zweitaktmotoren, oder den Nockenwellenantrieb aufnimmt. An der dem Schwungrad 12 gegenüberliegenden Seite der Kolbenmaschine ist ein Abschlußdeckel 7 vorgesehen, in welchem beispielsweise eine Ölpumpe od. dgl. angeordnet sein kann.

Sind die Bohrbilder an den Stirnseiten der Gehäuseteilblöcke 1 identisch, so können der Räderkasten 6 und der Abschlußdeckel selbstverständlich auch vertauscht angeordnet sein, was eine besondere Fertigungserleichterung darstellt.

Die Fig. 1a zeigt in dem vergrößerten Schnitt A der Fig. 1 die Ausbildung der in der Trennfuge 3 liegenden Lagerstelle 14 der Kurbelwelle 5. Hierbei grenzen die Lagerstühle 2 der benachbarten Gehäuseteilblöcke 1 aneinander und halten mittels Lagerbügeln 15 eine Lagerschale. Diese Lagerschale besteht in bekannter Weise aus einer Oberschale 14' und einer Unterschale 14'' und wird bevorzugt so hergestellt, daß sie zuerst mit einer Breite, die der Breite der beiden Lagerstühle 2 entspricht, bearbeitet und sodann in der Ebene, die in Montagelage in der Ebene der Trennfuge 3 zwischen den benachbarten Gehäuseteilblöcken 1 liegt, getrennt wird.

Für die Paßgenauigkeit der Lagerstühle ist es weiters günstig, wenn vor der spanabhebenden Bearbeitung der Lagersitze für die Lagerstellen 14 auf Paßform die Gehäuseteilblöcke 1 der Kolbenmaschine miteinander verbunden werden. Für die Abdichtung der Trennfugen 3 zwischen den Gehäuseteilblöcken werden vorteilhaft Dichtungsmassen verwendet, die in der Lage sind, Schubkräfte zu übertragen.

Die Fig. 2 und 3 zeigen Teilabschnitte der Ausbildung bzw. Verbindung zweier Gehäuseteilblöcke 1 im Bereich der Trennfuge. Wie in Fig. 2 ersichtlich ist, wird die Kurbelwelle 5 in dem Lagerstuhl 2 mittels eines Lagerbügels 15 hängend gehalten. Für die Verbindung der benachbarten Gehäuseteilblöcke 1 ist der Lagerstuhl 2 von einer Reihe von Schrauben 13 durchdrungen, wobei die Schrauben 13' als Paßschrauben ausgebildet sind. Die Ausrichtung der Schrauben 13 wechselt bei der Längsmittelebene, wie die Fig. 3 zeigt, so daß jeder der Teilblöcke 1 identisch ausgebildet sein kann. Dabei ist die Verbindung benachbarter Gehäuseteilblöcke 1 mit den Schrauben 13 so stark ausgebildet, daß ihre Belastbarkeit größer ist als die Belastbarkeit der Verbindung vergleichbarer, bekannter Motorblockgehäuse. Auch die Verbindung der Gehäuseteilblöcke 1 mit der Ölwanne 4 ist mindestens gleich belastbar wie die der Gehäuseteilblöcke untereinander.

In der Fig. 4 ist die Seitenansicht und in der Fig. 5 die Vorderansicht einer Kolbenmaschine dargestellt, die aus einem Gehäuseteilblock 1 mit sechs Zylindern und einem Gehäuseteilblock 1 mit vier Zylindern besteht. An der Abtriebsseite der Kurbelwelle mit dem Schwungrad 12 ist der Gehäuseteilblock 1 mit einem Abschlußdeckel 7 und am gegenüberliegenden Ende mit einem Räderkasten 6 versehen. Die aus Sphäroguß oder einem anderen Wirkstoff mit erhöhter Festigkeit gefertigte Ölwanne 4 ist mit beidseitig angeordneten Auflageleisten mit Durchgangslöchern für die Befestigung der Kolbenmaschine auf dem Fundament versehen.

In der Fig. 6 ist nochmals die 18-zylindrige Kolbenmaschine gemäß der Fig. 1 angedeutet, wobei hier zu erkennen ist, daß der Räderkasten 6 gegenüber dem Ausführungsbeispiel nach Fig. 4 nun an der Abtriebsseite und der Abschlußdeckel 7 an der gegenüberliegenden Seite angeordnet sind.

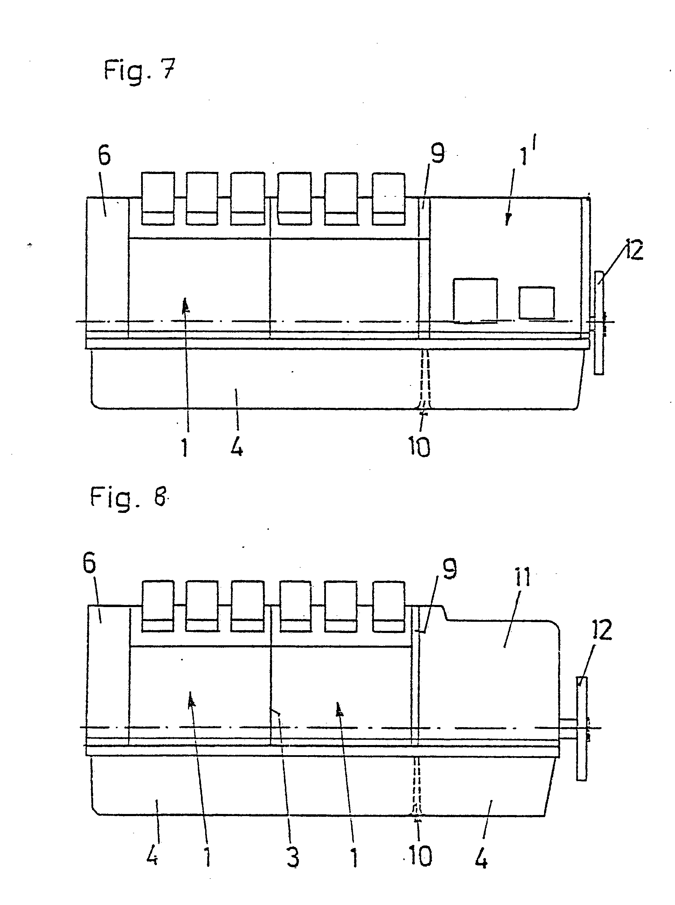

In der Fig. 7 ist das Schema einer erfindungsgemäßen Kolbenmaschine dargestellt, welche einen Antriebsteil aus zwei Gehäuseteilblöcken 1 mit je sechs Zylindern und einen Kompressorteilblock 1' aufweist, dessen Kolben von der entsprechend verlängerten Kurbelwelle des Antriebsteiles angetrieben werden. Zwischen dem Kompressorteilblock 1' und dem benachbarten Gehäuseteilblock 1 ist eine Zwischenwand 9 angeordnet, die an eine Querwand 10 der Ölwanne 4 dicht anschließt. Diese Querwand 10 ist geschlossen, so daß zwei völlig getrennte Ölräume für die treibende und für die getriebene Maschine entstehen. An der Durchführung der Kurbelwelle 5 ist eine bekannte Wellenabdichtung vorgesehen.

Die Fig. 8 zeigt das Schema einer Kolbenmaschine, die wiederum zwei erfindungsgemäße Gehäuseteilblöcke 1 mit je sechs Zylindern aufweist, wobei an einem der Gehäuseteilblöcke ein Getriebekasten 11 angeflanscht ist, dessen Primärwelle ebenfalls die Motorkurbelwelle 5 sein kann bzw. mit dieser biege- und verdrehweich gekuppelt ist. Auch hier sind der Getriebekasten 11 und der benachbarte Gehäuseteilblock 1 durch eine Zwischenwand 9 und eine Querwand 10 der Ölwanne 4 völlig getrennt. In diesem Fall kann das Trägheitsmoment der Zahnräder so gewählt werden, daß ein Motorschwungrad 12 dadurch ersetzbar ist, oder das Schwungrad 12 kann innerhalb des Getriebekastens 11 angeordnet sein.

Die Fig. 9 und 10 zeigen einen erfindungsgemäßen Gehäuseteilblock 1, welcher außer den sechs V-förmig angeordneten Antriebszylindern noch zwei in Höhe der Kurbelwelle liegende, in Längsrichtung gegeneinander versetzte Kompressorzylinder 18 aufweist. Diese Kompressorzylinder werden ebenfalls von der Motorkurbelwelle 5 mittels Pleuelstangen angetrieben. Jede dieser Pleuelstangen ist über einen Kreuzkopf 21, welcher in einer Kreuzkopfführung 19 verschiebbar ist, mit einer Kolbenstange 23 verbunden. Die Kolbenstange 23 durchdringt in der Kreuzkopfführung 19 eine Stopfbüchse 24. Die eigentlichen Kompressorzylinder sind in der Fig. 10 der Einfachheit halber weggelassen.

Die Fig. 11 zeigt ein Beispiel für die Anordnung zweier solcher Gehäuseteilblöcke 1, wobei vier Kreuzkopfführungen 19, 19', 19'' und 19''' vorgesehen sind.

Die Erfindung ist selbstverständlich auch auf Reihenmotoren oder andere Bauarten von Motoren anwendbar. Auch können Zylinderteilblöcke beliebiger Zylinderzahlen, beispielsweise achtzylindrige Teilblöcke, miteinander verflanscht werden. Besonders vorteilhaft ist, wenn die Kolbenmaschine aus sechszylindrigen und achtzylindrigen Gehäuseteilblöcken besteht. Dadurch können Kolbenmaschinen beliebiger, jeweils durch vier teilbarer Zylinderzahlen zusammengestellt werden.

**Patentansprüche**

1. Kolbenmaschine mit mindestens einer Reihe von Kolben aufnehmenden Zylindern, die in mindestens zwei miteinander verbundenen, beispielsweise verschraubten, mehrzylindrigen Gehäuseteilblöcken angeordnet sind, mit einer durchgehenden Kurbelwelle, an der die Kolben mittels Pleuelstangen od. dgl. angelenkt sind, und einer gemeinsamen Ölwanne, dadurch gekennzeichnet, daß jeder Gehäuseteilblock (1) einstückig mit Lagerstühlen (2) zur hängenden Lagerung der Kurbelwelle versehen ist, daß zwischen den unmittelbar benachbarten Lagerstühlen von zwei aneinandergrenzenden Gehäuseteilblöcken vertikale Trennfugen verlaufen, und daß die Gehäuseteilblöcke (1) unmittelbar mit der Ölwanne (4) verbunden, beispielsweise mit dieser verschraubt sind.

2. Kolbenmaschine nach Anspruch 1, dadurch gekennzeichnet, daß in den aneinander angrenzenden Lagerstühlen (2) benachbarter Gehäuseteilblöcke (1), welche jeweils eine Lagerstelle (14) mit Lagerschalen für die Kurbelwelle (5) bilden, auch die Lagerschalen (14', 14'') in der Ebene der Trennfuge (3) zwischen den Gehäuseteilblöcken (1) getrennt sind.

3. Verfahren zur Herstellung von Lagerstellen einer Kolbenmaschine nach Anspruch 2, dadurch gekennzeichnet, daß die Lagerschalen (14', 14'') zuerst mit einer Breite, die der Breite zweier Lagerstühle (2) entspricht, hergestellt werden und dann in der Ebene, die in Montagelage in der Ebene der Trennfuge (3) zwischen benachbarten Gehäuseteilblöcken (1) liegt, getrennt werden.

4. Kolbenmaschine nach einem der Ansprüche 1 und 2, dadurch gekennzeichnet, daß zwischen zwei benachbarten Gehäuseteilblöcken (1) eine Trennwand (9) angeordnet ist.

5. Kolbenmaschine nach Anspruch 4, dadurch gekennzeichnet, daß die Trennwand (9) in den Ölsumpf der Ölwanne (4) reicht und diesen abteilt, oder daß an die Trennwand (9) eine in der Ölwanne (4) befindliche Trennwand (10) anschließt.

6. Kolbenmaschine nach Anspruch 5, dadurch gekennzeichnet, daß die Trennwand (10) in der Ölwanne (4) einstückig mit dieser ausgebildet ist.

7. Kolbenmaschine nach einem der Ansprüche 1, 2 und 4 bis 6, dadurch gekennzeichnet, daß die Ölwanne (4) aus Sphäroguß oder einem anderen Werkstoff mit erhöhter Festigkeit gefertigt ist.

8. Kolbenmaschine nach einem der Ansprüche 1, 2 und 4 bis 7, dadurch gekennzeichnet, daß sie aus 6-zylindrigen und/oder 8-zylindrigen Gehäuseteilblöcken (1) besteht.

9. Kolbenmaschine nach einem der Ansprüche 1, 2 und 4 bis 8, dadurch gekennzeichnet, daß die Gehäuseteilblöcke (1) an ihren miteinander zu verbindenden Stirnseiten symmetrisch zur Längsmittelebene einerseits Befestigungsschrauben (13) und andererseits Bohrungen aufweisen.

10. Kolbenmaschine nach einem der Ansprüche 1, 2 und 4 bis 9, dadurch gekennzeichnet, daß die Zylinder in den Gehäuseteilblöcken (1) in an sich bekannter Weise in V-Form angeordnet sind.

## Claims

1. Piston engine with at least one row of cylinders accepting pistons, which are disposed in at least two partial casing blocks connected as for example bolted to one other, with a continuous crank shaft to which the pistons are linked by way of side rods or the like, and an oil pan, characterized in that each partial casing block (1) is provided integrally with bearing seats (2) for hanging support of the crank shaft, that vertical separating joints extend between the directly neighbouring bearing seats of two adjacent partial casing blocks, and that the partial casing blocks (1) are directly connected to the oil pan (4), for example screwed thereto.

2. Piston engine according to claim 1, characterized in that in the adjacent bearing seats (2) of neighbouring partial casing blocks (1), which form in each case a bearing position (14) with bushings for the crankshaft (5), the bushings (14', 14'') are also separatd in the plane of the separating joint (3) between the partial casing blocks (1)

3. Method of the machining of bearing positions of a piston engine according to claim 2, characterized in that the bushings (14', 14'') are first produced in a width which corresponds to the width of two bearing seats (2), and then separated in the plane which in the mounted position lies in the plane of the separating joint (3) between two neighbouring partial casing blocks (1).

4. Piston engine according to one of claims 1 and 2, characterized in that a separating wall (9) is arranged between two neighbouring partial casing blocks (1).

5. Piston engine according to claim 4, characterized in that the separating wall (9) reaches into the oil sump of the oil pan (4) and separates the same or that a separating wall (10) disposed in the oil pan (4) adjoins the separating wall (9).

6. Piston engine according to claim 5, characterized in that the separating wall (10) in the oil pan (4) is made as one piece with the same.

7. Piston engine according to one of claims 1, 2, and 4 to 6, characterized in that the oil pan (4) is manufactured from nodular cast iron or another material with increased strength.

8. Piston engine according to one of claims 1, 2 and 4 to 7, characterized in that it comprises 6-zylinder and/or 8-cylinder partial casing blocks (1).

9. Piston engine according to one of claims 1, 2 and 4 to 8, characterized in that the partial casing blocks (1) are at their front faces to be connected provided symmetrically to the longitudinal middle plane with attachment screws (13) on the one hand and with bore holes on the other hand.

10. Piston engine according to one of claims 1, 2 and 4 to 9, characterized in that the cylinders are disposed in the partial casing blocks (1) in a V-shape in a manner known per se.

## Revendications

1. Machine à pistons comportant au moins une rangée de cylindres recevant des pistons, qui sont disposés dans au moins deux blocs élémentaires à plusieurs cylindres, reliés entre eux, par exemple par boulonnage, un vilebrequin continu traversant sur lequel sont articulés les pistons au moyen de bielles ou analogues, et un carter d'huile commun, caractérisée en ce que chaque bloc élémentaire (1) est pourvu de façon monobloc de corps de palier (2) pour le montage en suspension du vilebrequin, en ce qu'il est prévu entre les corps de palier directement adjacents de deux blocs élémentaires mutuellement voisins des joints séparateurs verticaux et en ce que les blocs élémentaires (1) sont reliés directement avec le carter d'huile (4), en étant par exemple boulonnés avec celui-ci.

2. Machine à pistons selon la revendication 1, caractérisée en ce que dans les corps de palier (2) mutuellement adjacents de blocs élémentaires voisins (1), qui constituent chacun un palier (14) avec coussinets pour le vilebrequin (5), également les coussinets (14', 14'') sont séparés dans le plan du joint séparateur (3) entre les blocs élémentaires (1).

3. Procédé de fabrication de paliers d'une machine à pistons conforme à la revendication 2, caractérisé en ce que les coussinets de palier (14', 14'') sont réalisés d'abord avec une largeur qui correspond à la largeur de deux corps de palier (2) et en ce qu'ensuite ils sont séparés dans le plan qui, dans la position de montage, est placé dans le plan du joint séparateur (3) entre les blocs élémentaires adjacents (1).

4. Machine à pistons selon l'une des revendications 1 et 2, caractérisée en ce qu'il est prévu une cloison séparatrice (9) entre deux blocs élémentaires adjacents (1).

5. Machine à pistons selon la revendication 4, caractérisée en ce que la cloison séparatrice (9) s'étend dans le bac à huile du carter d'huile (4) et divise celui-ci ou bien en ce que la cloison séparatrice (9) est reliée à une cloison séparatrice (10) se trouvant dans le carter d'huile (4).

6. Machine à pistons selon la revendication 5, caractérisée en ce que la cloison séparatrice (10) est réalisée dans le carter d'huile (4) de façon à former une seule et même pièce avec celui-ci.

7. Maschine à pistons selon l'une des revendications 1, 2 et 4 à 6, caractérisée en ce que le carter d'huile (4) est fabriqué en fonte à graphite sphéoïdal ou en un autre matériau de grande résistance.

8. Machine à pistons selon l'une des revendications 1, 2 et 4 à 7, caractérisée en ce qu'elle se compose de blocs élémentaires (1) de six cylindres et/ou huit cylindres.

9. Machine à pistons selon l'une des revendications 1, 2 et 4 à 8, caractérisée en ce que les blocs élémentaires (1) comportent, sur leurs côtés frontaux à relier ensemble et symétriquement par rapport au plan central longitudinal, d'un côté des boulons de fixation (13) et de l'autre côté des trous.

10. Machine à pistons selon l'une des revendications 1, 2 et 4 à 9, caractérisée en ce que les cylindres sont disposés d'une manière connue en forme de V dans les blocs élémentaires (1).

Fig. 1

Fig.2

Fig.3

Fig.1a

Fig. 4

Fig. 5

Fig. 6

Fig. 7

Fig. 8

Fig. 10

Fig. 11

Fig. 9